# EUROPEAN PATENT APPLICATION

(11) **EP 2 236 824 A2**
(43) Date of publication of application: **06.10.2010**
(21) Application number: 10156300.5
(22) Date of filing: 12.03.2010
(51) Int. Cl.: F03G 7/00

(54) **Nanoporous carbon actuator**

(30) Priority: 13.03.2009 US 159855 P
(71) Applicant: Karlsruher Institut für Technologie, 76131 Karlsruhe (DE); LAWRENCE LIVERMORE NATIONAL LABORATORY, Livermore, CA 94550 (US)
(72) Inventor: Shao, Lihua, 76135 Karlsruhe (DE); Weissmüller, Jörg, 76297 Stutensee (DE); Biener, Jürgen, San Leandro, CA 94578 (US); Baumann, Theodore F., Discovery Bay, CA 94505 (US)
(74) Representative: Fitzner, Uwe

(57) **Abstract**

Artificial actuator comprising
a) a nanoporous carbon aerogel (2) immersed in
b) an electrolyte (5) or mixture of electrolytes (5),
c) means for applying a current and/or voltage (3, 5, 6)
d) if desired an encapsulation unit,

and its uses.

## Description

This application claims priority to US provisional application number 61/159,855 filed on March 13, 2009.
The entire disclosure of the prior application/applications is considered to be part of the disclosure of the instant application and is hereby incorporated by reference.

Any of the documents cited herein are incorporated by reference in their entirety.

The instant invention relates to electrochemical induced macroscopic strain effects of nanoporous carbon structure and more particularly to the combination of (1) a bulk nanoporous carbon material with extreme surface area and (2) electrochemical addressing of the surfaces for actuation.

### Background of the invention:

An actuator converts an external electrical signal into a mechanical force by changing its dimensions. A well-known example for such a device is a piezoelectric actuator. Recently a novel reversible strain effect has also been demonstrated for nanoporous metals such as nanoporous gold (np-Au). In contrast to piezoelectric materials where the dimensional changes are caused by the polarization of the whole material, the reversible strain in metals originates from surface stress. Microscopically, surface stress is a consequence of the fact that surface atoms 'prefer' interatomic spacings different from those of the underlying bulk. The surface stress of a given material is not a constant, but is sensitive to charge transfer processes at the surface. For example, the surface stress can be modified by adsorption of strongly interacting atoms or molecules, or by applying a potential in an electrochemical environment. The properties of bulk materials are usually not affected by changes of the surface stress. However, in the case of high surface area materials such as np-Au this charge-induced surface stress can reversibly strain the whole sample by up to 0.02%, which is comparable to the strain amplitudes of commercial piezoelectric actuators.
Surface stress induced macroscopic and reversible strain effects have been observed for nanoporous metals in an electrochemical environment; see for example Science 300, 312 (2003) and Nano Lett. 4, 793 (2004). In particular, nanoporous Pt and Au have been demonstrated to yield strain amplitudes comparable to those of commercial ferroelectric ceramics. Whether this charge-transfer induced macroscopic strain effect can be used to develop a new economically viable actuator technology will strongly depend on materials costs, efficiency and long-term stability. However, nanoporous noble metals such as nanoporous Pt and Au are heavy and costly, and show aging effects. Similar solutions using nanoporous metals are known from e.g. DE 103 11 487 B3, EP 1 621 875 A1, DE 10 2007 032 939 B3 and US 2009/0101241 A1.
Baughman (R. H. Baughman et al., Science 284, 1340 (1999).) has used carbon nanotubes (CNT's) for actuation. That material can only be loaded in tension, it can only form rope- or sheet geometry not 3-d bodies, and it is prohibitively costly.

### Object of the invention:

It was an object of the instant invention to reduce cost by using a less expensive material, to improve the long-term stability, and to enhance the mass-specific stored energy density. Additionally, it was an object of the instant invention to provide stronger actuator materials than the currently used noble metal based systems.

### Summary of the invention:

The object of the instant invention has been solved by by going to lightweight material, in particular a carbon material, which is especially a carbon aerogel.

The solution is in particular to employ carbon aerogels with extremely high mass-specific surface area (up to 3200 m²/g). The material forms macroscopic (for instance, mm-sized) monolithic bodies that support compressive stress and shear stress.

The instant invention is in particular a combination of (1) a bulk nanoporous carbon material with extreme surface area and (2) electrochemical addressing of the surfaces for actuation.

### Definitions of terms:

Any indications of quantity given in the instant invention are to be considered as indications of quantity by weight, if not specified otherwise.

In the instant invention the term "room temperature" is intended to mean a temperature of 20°C with a deviation of plus/minus 3°C; if not specified otherwise, temperature values are to be considered as degrees centigrade (°C).

In the instant invention are the given reactions or process steps are carried out at normal pressure/atmospheric pressure, that is at 1013 mbar.

In the instant invention the term "actuation" is intended to mean a reversible shape change, controlled by an applied voltage. Likewise an actuator is the device that changes its shape by the applied voltage.

In the instant invention the term carbon aerogel" refers to such materials that are prepared through the sol-gel polymerization of organic precursors, preferably resorcinol and/or formaldehyde, in aqueous solution, preferably using acetic acid as the reaction catalyst (Of course, any materials suitable for sol-gel polymerization may be used as would be known to one of skill in the art.) to produce highly crosslinked organic gels that are supercritically dried and subsequently pyrolysed in an inert atmosphere. Pyrolysis of the organic aerogel then yields a porous carbon network. The instantly used carbon aerogel material was developed to combine the properties of mechanical robustness, fast mass transport and high surface area.
Such carbon areogels are described in
- Chem. Mater., Vol. 18, No. 26, 2006, 6085 to 6087, especially page 6085, second column and table 1, and
- Materials 2009, 2, 2404-2428, especially pages 2414 et seq., items 3., 3.1., 3.3..

The term "carbon aerogel" is sometimes abbreviated as "CA" in the instant invention.

The term "nanoporous" in the context of the instant invention describes the pores that are present in the carbon aerogels and as such encompasses pores with diameters between 0.5 and 80 nm, more specifically pores with diameters between 2 and 50 nm.

### Detailed description:

In the drawings and the following description, like parts are marked throughout the specification and drawings with the same reference numerals, respectively. The drawing figures are not necessarily to scale. Certain features of the invention may be shown exaggerated in scale or in somewhat schematic form and some details of conventional elements may not be shown in the interest of clarity and conciseness.

In the instant invention, the charge-induced strain effect in carbon aerogels is used to provide novel actuators.

In the instant invention, an artificial actuator comprising, preferably consisting of,
a) a nanoporous carbon aerogel immersed in
b) an electrolyte or mixture of electrolytes,
c) means for applying a current and/or voltage,
d) if desired an encapsulation unit,
   is provided.

The instant invention addresses an electrochemically-driven or drivable actuator which is based on carbon aerogels, preferably a nanoporous carbon material developed at Lawrence Livermore National Laboratory. This material is known and for example described in detail in Chem. Mater., Vol. 18, No. 26, 2006, 6085 and Materials 2009, 2, 2404-2428; the carbon aerogels described in these two documents are especially well suited for the instant invention. This material has a 3D structure, and can be made in the form of monolithic 3D bodies which can be loaded in both tension and compression. The material forms macroscopic (for instance, mm-sized) monolithic bodies that support compressive as well as shear stress.
Carbon aerogels are mesoporous (i.e., a material containing pores with diameters between 2 and 50 nm) materials which combine many interesting properties such as low mass densities, continuous porosities, high surface areas, high electrical conductivities, and excellent mechanical properties. The properties of CAs are derived from their microstructure, which is a network of interconnected primary particles with characteristic diameters between 3 and 25 nanometres.
Preferably, the instantly used CAs contain additional macropores (>50 nm) and micropores (<2 nm).
The macropores enhance the mechanical robustness and mass transport and can be introduced by controlling by the sol-gel reaction chemistry, whereas the micropores for high surface area can be introduced by activating the material with carbon dioxide.
CAs are a unique class of porous carbons that possess ultrafine cell sizes, continuous porosities, and low mass densities. These properties arise from the aerogel microstructure, a three-dimensional network of interconnected primary carbon particles with diameters that can range from a few nanometres to several microns. In contrast to the metallic bonding in nanoporous Au, CAs are a covalently bound material which makes them more stable against thermal coarsening. In addition, the graphitic character of the CA surface adds further stability to the structure.

In some embodiments, the carbon aerogel may include a network of interconnected primary particles, the primary particle having a characteristic diameter of between about 3 nm and about 25 nm. In further embodiments, the characteristic diameter may be between about 3 - -10 nm, between about 5 - 15 nm, between about 12 - 25 nm, between about 5 - 20 nm, etc.

The strain-charge response of these materials was tested in the context of the present invention in an experimental setup consisting of a miniaturized electrochemical cell which was operated in the sample compartment of a commercial dilatometer. The aerogel is wetted e.g. by aqueous salt solutions or nonaqueous electrolyte(s). Advantageous properties of the instantly usable materials thus can be
- monolith, large samples available,
- designer bimodal pore size distribution for strength and material transport (pores >50 nm) and high surface area (pores <2 nm),
- three-dimensional architecture that is composed of nano-particles of graphene,
- thermal stability for high temperature applications.

In some embodiments, the carbon aerogel may have a mass-specific surface area of greater than about 2000 m²/g, and in some further approaches, greater than about 2800 m²/g.

Preferably, a class of these carbon aerogels with extremely high mass-specific surface area of up to 3200 m²/g (Brunauer-Emmet-Teller surface area = BET) is employed in the instant invention, one preferred CA has a BET of 2800 m²/g.

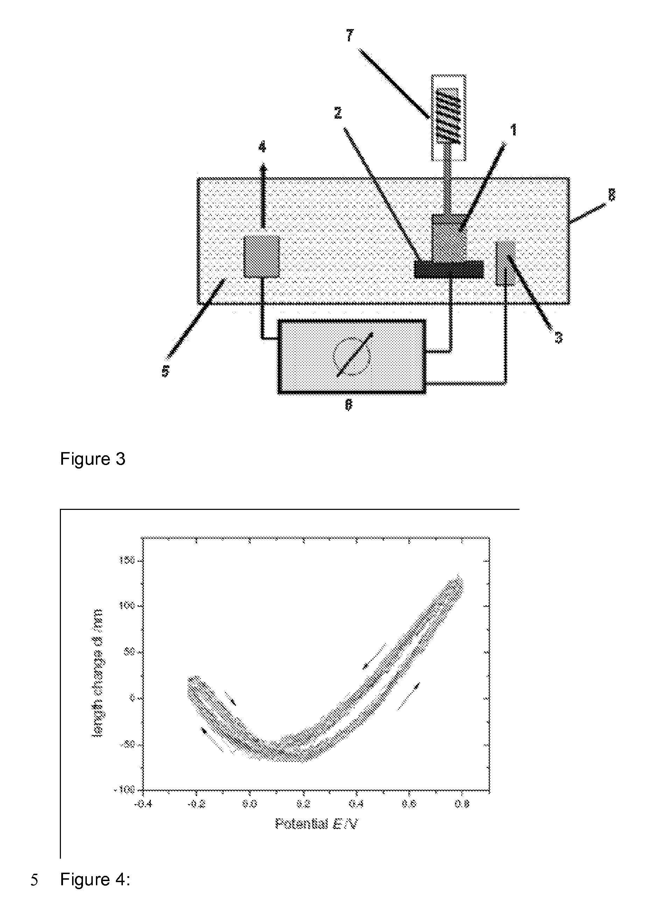

The actually applied CA can have various sizes, for example in the experiments leading to the instant invention (like that represented by Figure 3) CA with dimensions of1.75*1.125*1.15 mm³ and a mass of 0.38312 mg have been used. The instant invention is, however, by no means limited to this size. The actual size of the employed CA is only determined by the actual application of the invention.

From carbon aerogels large monolithic pieces can be produced inexpensively, and the density of the non-activated, as prepared CA material is approximately ten times lower than that of np-Au (about 0.5 g/cm³ versus about 6 g/cm³). This density can be further reduced by activation of the CA; a 3000 m²/g CA material typically has densities of 0.1 - 0.2 g/cm³. Despite of its low density, the material is mechanically very robust, and exhibits a modulus of up to 3 GPa.

The potential of zero charge (PZC) of CA is 90 mV (+/-5 mV).

In the instant invention both as-prepared CA can be used, as well as (thermally) activated, preferably activated with CO₂, CA.
Thermal activation involves the controlled burn-off of carbon from the network structure in an oxidizing atmosphere resulting in the creation of new micropores as well as opening of closed porosity in the CA framework.

Depending on the charge of the CA, reversible dimensional changes of the CA are induced.

In a variation of the instant invention, the electrolyte is selected from the group consisting of aqueous salt solutions, nonaqueous electrolyte and/or mixtures thereof.

In a variation of the instant invention, the electrolyte is selected from the group consisting of NaF in H₂O, KOH in H₂O, KCI in H₂O sulphuric acid, perchloric acid and mixtures thereof.
In a variation of the instant invention, the electrolyte is NaF in H₂O.
In still further variations of the instant invention, the electrolyte is between 0.005 M and 1 M NaF in H₂O, preferably 0.05 M or 0.7 M NaF in H₂O.
In another variation of the instant invention Fluoride anions (F⁻) are combined with other cations, selected form K⁺, Li⁺ and in the molar amounts given above.
In a variation of the instant invention the nonaqueous electrolyte is selected from ionic liquids and/or solid-state electrolytes.
lonic liquids typically exhibit low vapor pressures, and can show high thermal stabilities. Thus ionic liquids can be advantageous for high-temperature applications.

The means for applying a voltage and/or current is in one variation of the instant invention a potentiostat and two electrodes, one electrode being the working electrode (CA electrode), the other the counter electrode.

By applying a voltage and/or current, the carbon aerogel changes its size due to chemical changes on its surface.

It is a preferred variation of the instant invention to apply a certain voltage rather than a current.

In a variation of the instant invention the applied voltage is less than 1.5 V, which is a voltage value far below those needed to actuate piezoelectric actuators, and therefore allows the composition to be used in devices where minimizing voltage usage is important, such as devices relying on solar power or other renewable sources, devices running on low power/long lasting batteries, etc..

This change in size is then used in the instant invention to actuate.

The change in size can be an increase or a decrease in size.

Usually the CA is in a longitudinal form, so that the part of the size change that is used for actuation purposes is usually the length change.
The CA can, however, have any form in the context of the instant invention and is only limited by the desired/chosen application/use.

By this size-change it is possible move weights.
These weights can be any of a given objects, depending on the desired use of the instant invention's actuator.

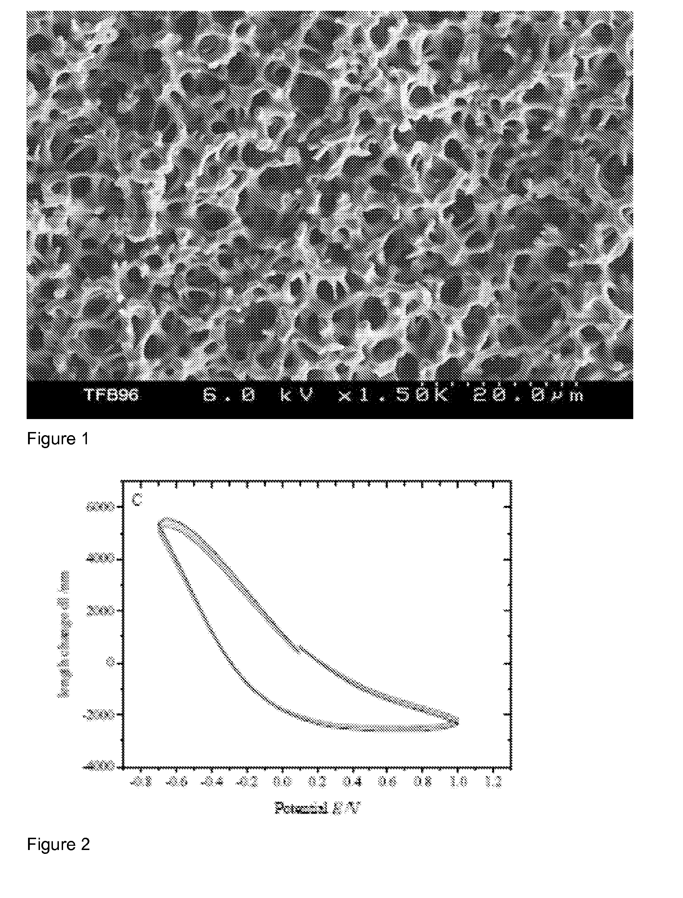

In one variation of the instant invention the CA is attached onto an inert carrier, such that the size change is (mainly) unidirectional away from the inert carrier (see figure 3), e.g. like that disclosed in DE 103 11 487 B3, figure 2.
The actuator of the instant invention can in another variation be built such that the nanoporous CA is attached to an inert material, so that the size change of the CA results in a bending or curling movement, because the inert material does not change its size, e.g. similarly to that disclosed in DE 103 11 487 B3 figures 1, 3, 5.
These two variations are described (with other nanoporous materials) in DE 103 11 487 B3, paragraph [0050].

The inert carrier material can be any material that does not change its size when the electrolyte changes its electrical properties or when the applied current and/or voltage is changed. In this context it is to be noted that in the instant invention the expression "does not change its size" is intended to encompass the meaning that a small size change of this material is still acceptable, as long as it is small compared to the size change of the CA, preferably at least 10-times smaller, particularly at least 25-times smaller and especially at least 50-times smaller.

Examples for inert carrier materials employable in the instant invention are metals of any kind, polymeric compounds, carbon.
More specific examples for inert carrier materials employable in the instant invention are selected from the group consisting of Al, Ag, Au, Pt, polyethylene sheets or blocks , polycarbonate sheets or blocks, carbon nanotubes, carbon fibres, steel, stainless steel and mixtures/alloys thereof.

In one variation of the instant invention its is possible to substitute the inert carrier material with a second species of CA, that has different properties than the first one, for example one that has a smaller or bigger specific surface.

As one crucial part of the instant invention is the electrolyte, which is usually liquid at room temperature, the actuator needs to be put into any kind of enclosure. This can be a permanent enclosure, like for example an encapsulation, a housing or it can be any available kind of vessel, for example a glass that is available at the time and space of the application of the instant invention's actuator.
Thus it is possible to transport the various parts of the instant invention's actuator and assemble it at the spot, thus giving the user enhanced freedom of operability.

In a possible variation of the instant invention's actuator is not encapsulated, which is possible, when the electrolyte is viscous enough not to flow from the CA.

It is possible to completely encapsulate the CA, the electrodes and the electrolyte in any desired kind of capsule.
It is in one variation even possible to directly cover the surface of the CA by the encapsulation unit, as it is sufficient that electrolyte penetrates throughout the CA - in this variation however, the capsule material should be flexible.

The encapsulation unit can fully encapsulate the actuator of the instant invention, preferably when full encapsulation is chosen, a device for pressure equalization is present as part of or attached to the encapsulation unit.

Obviously, if acids are used it is preferred that the actuator is fully encapsulated for safety reasons.

An encapsulation that is very well suited is an electrochemical cell, as it has already the space for the electrolyte and two electrodes, the working electrode and the counter electrode.

The material of the encapsulation material should be inert to the electrolyte employed.
In a variation of the instant invention the encapsulation material is steel or stainless steel.

In embodiments suitable for high temperature operation, e.g., at ambient temperatures higher than about 500°C, and preferably higher than about 1000°C, the CA is preferably protected from oxidation by being isolated from ambient oxygen, e.g., oxygen in air, in the electrolyte, etc. In one approach, a solid state or an ionic liquid electrolyte may be used. In another approach, the packaging enclosing the CA may provide a barrier to oxygen.

In one variation of the instant invention the reference electrode is selected from the group consisting of Ag/AgCl electrodes and saturated calomel electrodes and mixtures thereof, particularly Ag/AgCl electrodes.

In one variation of the instant invention the counter electrode is selected from the group consisting of CA electrodes or any other inert high surface area materials and mixtures thereof.

The means for applying a current and/or voltage in the instant invention can be any such means known in the art as long as the current and/or voltage can be regulated.
It can for example be power adaptors to local power sources (wall sockets, generators, photovoltaic cells etc.) or it can be battery driven.

In one variation the actuator is used a a sensor; here any species that is added to the electrolyte will change the electrical properties of the electrolyte and thus, in turn, change the surface chemistry of the actuator, resulting in a size change that can be measured, thus giving a indication of/for the added species. In this variation the voltage and/or current current is kept constant.
For this and other similar applications/uses commercial position sensors, e.g. inductive position sensors like dilatometers, can be used to measure the change of size of the CA.

In a variation of this variation it is possible to vary the current and/or voltage in order to keep the size change at about zero and use the applied voltage and/or current as indication (via amperemeters or voltmeters) for the species or amount of species added to the electrolyte.

In other variations the actuator is actually used to shift the position of a weight, thus functioning as a switch or a repositioning device. The underlying principles are that either through addition of a species to the electrolyte a size change is achieved (like above described) or that by changing the applied voltage and/or current a size-change of the aerogel is achieved.

In these variations the electrical changes of the system, i.e., the changes in the surface chemistry of the CA are actually transferred into movement.
These can therefore be use as artificial muscles.
If the force of the movement is transferred crankshaft-like and the applied current is alternating current, rotational movements are achievable, thus enabling the construction of motors.

In a variation of the instant invention, the carbon aerogel may be doped or coated, with further chemical elements, that is further chemical elements may be present, in an amount of up to 25% by weight.
When present as dopants or as coating, these elements need not be nanoporous, however in a variation of the instant invention they are, like those described in e.g. US 2009/0101241 A1.
Preferred chemical elements are those of the groups 8, 9, 10, 11, 12 of the periodic table of elements (IUPAC 1985 nomenclature), more preferably selected from the group consisting of W, Ru, Pt, Cu, TiO₂, ZnO and mixtures thereof, especially preferably Ru, Pt.

This coating material may impart specification characteristics or properties to the composition that may be useful in certain applications/situations, such as wear resistance, chemical resistance, etc. In some further variations, the coating material may be deposited via atomic layer deposition (ALD), which provides for extremely accurate layer deposition.

Experiments conducted in connection with the instant invention on carbon aerogels reveal strain amplitudes of about 0.02% (see Figure 4).

One example of the instant invention shows that large reversible strains of up to 0.45% can be realized (Figure 2).

Even larger strains, were realized in a variation of the instant invention by optimized wetting of the carbon aerogel and optimized the electrolyte composition and concentration.

In a further variation of the instant invention, a larger strain amplitude was attained when the wetting of the CA and the concentration of electrolyte were varied.

The strain amplitudes presented in the invention are comparable to those observed for np-Au.

In a variation of the instant invention the performance of the material can be improved by using aprotic electrolyte solutions, and by using CAs with higher surface area.

In one variation of the instant invention, the actuator is provided as a do-it-yourself actuator kit.
This means that separately
i) the CA either attached to an inert carrier or not in an encapsulation housing with two electrodes
ii) a selection of various electrolytes
iii) a means for applying a current and/or voltage
   are provided and the artisan can built its own actuator from it at the spot.
   This is especially useful, if the actuator of the instant invention should be used as a sensor device for certain chemical species.

In another variation of the instant invention, a method for electrochemically actuating an object includes providing a nanoporous carbon aerogel composition, wetting the composition with an electrolyte, and causing charge-induced reversible strain of the composition wetted with the electrolyte such that an object is actuated by the strain.
In this variation the above described specific embodiments of the respective elements can be applied.

In yet another variation of the instant invention, a system for actuating an object includes an electrochemically driven actuator, which has a nanoporous carbon aerogel composition wetted by an electrolyte, a mechanism for causing charge-induced reversible strain of the composition, and a mechanism for regulating an amount of the electrolyte contacting a surface of the composition, thereby controlling the amount of charge-induced reversible strain of the composition.
The mechanism for regulating an amount of the electrolyte contacting a surface of the composition may be any device as would be known to one of skill in the art, such as a regulator, a valve, an orifice plate, a capillary-force mechanism, etc.
In this variation the above described specific embodiments of the respective elements can be applied.

Some applicable uses of the instant invention are described in the following variations:
- The actuator can be used as a voltmeter, i.e., to show or register of an electric current, especially in electrochemical environments.
- The actuator can be used as a sensor for the concentration of ions and/or adsorbents, wherein the display can be directly by the position of the actuator's end.
- The actuator can be used as an actuator itself for the movement of microscopic valves, for adaptive optics, for intelligent materials which can change their form when desired, for artificial muscles, for miniature robots or miniature prostheses.
- The actuator can be used as switches or regulator, for example to open and close a electrical circuit, or as adjusting element for valve flaps. Due to the sensoring properties of the instant invention's actuator, it can be used as a automatic/self-acting switch and thus be used for automatic adjustment systems. It can for instance be used to keep constant an electrolyte-concentration by moving the inlet-valve for a salt-solution or by closing the electrical circuit of a pump, e.g. to keep constant the concentration of metal ions in a galvanic bath.
- Analogous to piezoelectric elements the conversion of movement and/or force or acceleration is possible, so that the instant invention can be used as movement or force sensor.
- The movement of the CA element can also be used for the selective deposition of ions into the solution.

Some advantages of the instant invention are low cost, low weight, large amplitude actuation.

One further advantage of the instant invention is that the actuators - due to the material - are not prone to corrosion, like metal actuators are.

It is one of the biggest advantages of the instant invention that the employed material is less expensive than the previously used materials.

Still one further advantage of the instant invention is that one single material is sufficient to produce actuators.

Some advantages of the instant invention are therefore that
- the actuators of the instant invention have a strain comparable to that of conventional piezoelectric materials.
- the actuators are light-weight, of inexpensive and safe materials, that do not contain lead,
- the actuators are scalable - large area actuators,
- a low voltage driving signal (milli-Volt instead of several hundred Volts in prior art) is sufficient, rendering the application cheaper and safer,
- the actuators are thermally stable and thus have the potential for high temperature applications (the CA is thermally stable up to at least 1000°C in an inert atmosphere and in some embodiments up to about 1500°C and thus may allow for high temperature applications depending on the thermal stability of the electrolyte),
- unlike many other porous carbons, CAs may be fabricated in a variety of forms, including monoliths and thin films,
- the material is equally well-suited for hydrogen storage, supercapacitor and electro-catalysis applications (fuel cells) making a combination possible.

Also, the technology of the instant invention is scalable, that is, large monolithic actuators can be envisioned, e.g., greater than about 1 mm³, greater than about 1 cm³, greater than about 10 cm³, etc. Moreover, such larger structures may be formed of one contiguously-formed structure or several smaller structures coupled together. Moreover, the material can be formed or machined in many different shapes, e.g., disk-like shapes, dice-like shapes, ball-like shapes, cone-like shapes.

The instant invention's actuators can be used for medical catheter applications, for airflow control in jet engines, for marine and biomedical applications, for mechanical sensors, for energy-conversion devices, for sensor-response amplifiers, as sensing devices, for direct conversion of electrical energy into mechanical energy, for artificial muscles, for motors, for electroactive polymers.

One preferred use according to the instant invention is the use for actuation.

Some preferred embodiments of the instant invention are described by the following items:
- Item 1.: An electrochemically drivable actuator, comprising: a nanoporous carbon aerogel composition capable of exhibiting charge-induced reversible strain when wetted by an electrolyte and a voltage is applied thereto.
- Item 2.: The electrochemically driven actuator recited in item 1, wherein the carbon aerogel forms a homogeneous macroscopic monolith with a volume of greater than about 1 mm³.

- Item 3.: The electrochemically driven actuator recited in item 1, wherein the carbon aerogel forms a homogeneous macroscopic monolith with a volume of greater than about 1 cm³.
- Item 4.: The electrochemically driven actuator recited in item 1, wherein the carbon aerogel forms a homogeneous macroscopic monolith with a volume of greater than about 10 cm³.
- Item 5.: The electrochemically driven actuator recited in item 1, wherein the composition further comprises a coating material selected from a list consisting of: W, Ru, Pt, Cu, TiO₂, and ZnO.
- Item 6.: An electrochemically driven actuator, comprising: a nanoporous carbon aerogel composition wetted by an electrolyte; and a mechanism for causing charge-induced reversible strain of the composition.
- Item 7.: The electrochemically driven actuator recited in item 6, wherein the carbon aerogel has a mass-specific surface area of greater than about 2000 m²/g.
- Item 8.: The electrochemically driven actuator recited in item 6, wherein the carbon aerogel has a mass-specific surface area of greater than about 2800 m²/g.
- Item 9.: The electrochemically driven actuator recited in item 6, wherein the carbon aerogel has a bimodal pore size distribution comprising macropores having an average diameter of greater than about 50 nm and micropores having an average diameter of less than about 2 nm.
- Item 10.: The electrochemically driven actuator recited in item 6, wherein the carbon aerogel includes a network of interconnected primary particles, the primary particle having a characteristic diameter of between about 3 nm and about 25 nm.
- Item 11.: The electrochemically driven actuator recited in item 6, wherein the carbon aerogel has a three-dimensional architecture that is comprised of nano-particles of graphene, graphene in one embodiment of the instant invention being a one-atom-thick layer of a carbon lattice with a honeycomb structure.
- Item 12.: The electrochemically driven actuator recited in item 6, wherein the electrolyte is aqueous.
- Item 13.: The electrochemically driven actuator recited in item 6, wherein the electrolyte is nonaqueous.
- Item 14.: The electrochemically driven actuator recited in item 6, wherein the electrolyte comprises at least one material selected from a list consisting of: NaF, KOH, KCI, H₂SO₄, and HClO₄.
- Item 15.: The electrochemically driven actuator recited in item 6, wherein the electrolyte is an ionic liquid.
- Item 16.: The electrochemically driven actuator recited in item 6, wherein the electrolyte is a solid-state electrolyte.
- Item 17.: The electrochemically driven actuator recited in item 6, wherein the mechanism provides a voltage to the composition of less than about 1.5 V.
- Item 18.: The electrochemically driven actuator recited in item 6, wherein the composition further comprises a coating material selected from a list consisting of: W, Ru, Pt, Cu, TiO₂, and ZnO.
- Item 19.: The electrochemically driven actuator recited in item 18, wherein the coating material is deposited via atomic layer deposition.
- Item 20.: The electrochemically driven actuator recited in item 6, wherein the composition is isolated from ambient oxygen.
- Item 21.: A method for electrochemically actuating an object, the method comprising: causing charge-induced reversible strain of a nanoporous carbon aerogel composition wetted with an electrolyte to actuate the object by the strain.
- Item 22.: The method of item 21, wherein the carbon aerogel has a massspecific surface area of greater than about 2000 m²/g.
- Item 23.: The method of item 21, wherein the carbon aerogel has a massspecific surface area of greater than about 2800 m²/g.
- Item 24.: The method of item 21, wherein the carbon aerogel includes a network of interconnected primary particles, the primary particle having a characteristic diameter of between about 3 nm and about 25 nm.
- Item 25.: The method of item 21, wherein the electrolyte is aqueous.
- Item 26.: The method of item 21, wherein the electrolyte is nonaqueous.
- Item 27.: The method of item 21, wherein the electrolyte comprises at least one of: NaF, KOH, KCI, H₂SO₄, and HClO₄.
- Item 28.: The method of item 21, wherein the electrolyte is an ionic liquid.
- Item 29.: The method of item 21, wherein the electrolyte is a solid-state electrolyte.
- Item 30.: The method of item 21, wherein a voltage provided to the composition is less than about 1.5 V.
- Item 31.: The method of item 21, further comprising depositing a coating material on the composition, the coating material being selected from a list consisting of: W, Ru, Pt, Cu, TiO₂, and ZnO.
- Item 32.: The method of item 31, wherein the coating material is deposited via atomic layer deposition.
- Item 33.: The method of item 21, further comprising controllably wetting the composition with the electrolyte.
- Item 34.: A system for actuating an object, the system comprising: an electrochemically driven actuator, comprising: a nanoporous carbon aerogel composition wetted by an electrolyte; a mechanism for causing charge-induced reversible strain of the composition; and a mechanism for regulating an amount of the electrolyte contacting a surface of the composition, thereby controlling the amount of charge-induced reversible strain of the composition.

### Description of the Figures:

Reference numbers:
- 1: nanoporous CA body
- 2: inert carrier material
- 3: reference electrode
- 4: counter electrode
- 5: electrolyte
- 6: potentiostat
- 7: position sensor (e.g. dilatometer)
- 8: encapsulation unit
- 9: electrically conductive cap
- 10: housing
- 11: insulator
- 12: high surface area liner
- 13: separator
- 14: piston
- 15: gasket

Figure 1:
   Characteristic morphology of a carbon aerogel before activation in CO₂ at 950°C. The material is synthesized through a sol-gel polymerization of resorcinol with formaldehyde in aqueous solution to produce organic gels that are then supercritically dried and subsequently pyrolysed in an inert atmosphere.
Figure 2:
   Potential versus strain (dl/l) plot showing four successive in situ cyclic scans in 0.7 M NaF at the scan rate of 2 mV/s and in a potential range from -0.7 to 1.0 V. The reversible strain is about 0.45%, which corresponds to an actuator stroke of about 9 µm for a 2 mm long sample.
Figure 3:
   The strain-charge response of these materials as well as electrochemical actuation was tested in an experimental setup as shown in this figure.
   The setup consists of a miniaturized electrochemical cell, made of glass 8, which was operated in the sample space of a commercial dilatometer 7.
   The carbon aerogel 1 is placed on an inter carrier 2 and wetted by electrolyte 5. A reference electrode 3 and a counter electrode 4 are present within the electrolyte. A potentiostat 6 is used to control the voltage. A small voltage (relative to a reference electrode 3) is applied to the carbon material 1 using a voltage source 6.
   To measure the strain-charge as well as electrochemical actuation a voltage is applied and the dimensional changes of the CA are measured by the dilatometer (or another displacement sensor) and registered or plotted.
Figure 4:
   Shows the measured length change of the sample as a function of the applied potential versus a Ag/AgCl reference electrode using 1M sulphuric acid as electrolyte.
Figure 5:

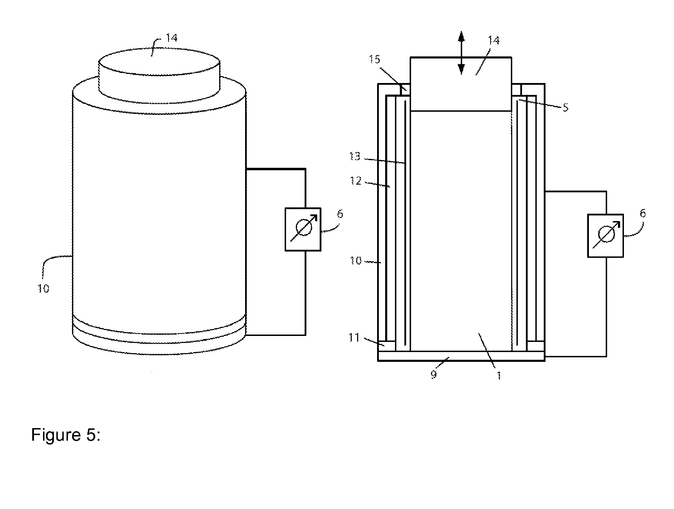

   Figure 5 depicts a system comprising an encapsulated actuator and two electrodes according to one embodiment. As shown, the monolithic nanoporous carbon body 1 rests on or is mounted to an electrically conductive cap 9, e.g. of steel or other material which acts as one electrode. The carbon body is enclosed in a housing 10 which may be or include the second electrode. An insulator 11 may be used to isolate the housing 10 from the conductive cap 9. A high surface area liner 12 may line the housing 10 and be separated from the monolithic nanoporous carbon body 1 by a separator 13. A piston 14 is actuated by the monolithic nanoporous carbon body 1. A gasket 15 may engage the piston. The gasket 15 may be electrically insulating. An electrolyte 5 is present in the housing 10, preferably at least to a height of the monolithic nanoporous carbon body 1. A potentiostate 6 or other suitable device may be present to control the charge applied to the monolithic nanoporous carbon body 1.

Although only the uniaxial strain response, ΔL/L of the system, is presented in this description, it is a 3-dimensional phenomenon where the volume change AV/V is given by 3ΔL/L.

The various embodiments and variations of the instant invention, including those of the dependent claims, can be combined with each other in any desired manner.

## Claims

1. Artificial actuator comprising
a) a nanoporous carbon aerogel (2) immersed in
b) an electrolyte (5) or mixture of electrolytes (5),
c) means for applying a current and/or voltage (3, 5, 6)
d) if desired an encapsulation unit.

2. Artificial actuator according to claim 1, **characterized in that** the electrolyte (5) is selected from the group consisting of aqueous salt solutions, nonaqueous electrolyte and/or mixtures thereof.

3. Artificial actuator according to claim 1 or 2, **characterized in that** the electrolyte (5) is selected from the group consisting of NaF in H₂O, sulphuric acid, perchloric acid or mixtures thereof.

4. Artificial actuator according to any one of claims 1 to 3, **characterized in that** the electrolyte (5) is between 0.005 M and 1 M NaF in H₂O.

5. Electrochemically drivable actuator, comprising:
a nanoporous carbon aerogel composition capable of exhibiting charge-induced reversible strain when wetted by an electrolyte and a voltage is applied thereto.

6. Electrochemically driven actuator according to claim 5, comprising:
a nanoporous carbon aerogel composition wetted by an electrolyte; and
a mechanism for causing charge-induced reversible strain of the composition.

7. A process for electrochemically actuating an object comprising:
causing charge-induced reversible strain of a nanoporous carbon aerogel composition wetted with an electrolyte to actuate the object by the strain.

8. Use of an actuator according to any one of claims 1 to 6 for medical catheter applications, for airflow control in jet engines, for marine and biomedical applications, for mechanical sensors, for energy-conversion devices, for sensor-response amplifiers, as sensing devices, for direct conversion of electrical energy into mechanical energy, for artificial muscles, for motors, for electroactive polymers.

9. A system for actuating an object comprising:
an electrochemically driven actuator, comprising:
a nanoporous carbon aerogel composition wetted by an electrolyte;
a mechanism for causing charge-induced reversible strain of the composition; and
a mechanism for regulating an amount of the electrolyte contacting a surface of the composition, thereby controlling the amount of charge-induced reversible strain of the composition.
